# NEUE EUROPÄISCHE PATENTSCHRIFT

(11) **EP 1 621 736 B2**
(45) Veröffentlichungstag und Bekanntmachung des Hinweises auf die Entscheidung über den Einspruch: **16.08.2017**
(45) Hinweis auf die Patenterteilung: 17.04.2013
(21) Anmeldenummer: 05106363.4
(22) Anmeldetag: 12.07.2005
(51) Int. Cl.: F01D 11/02, F02C 7/12, F02C 7/28, F01D 25/12, F01D 11/00

(54) **Wandstruktur zur Begrenzung eines Heissgaspfades**
Wall structure for a hot gas flow path
Structure de paroi de conduits de gaz chauds de turbine à gaz

(30) Priorität: 30.07.2004 DE 102004037356
(43) Veröffentlichungstag der Anmeldung: 01.02.2006
(73) Patentinhaber: Ansaldo Energia IP UK Limited, London W1G 9DQ (GB)
(72) Erfinder: Rathmann, Ulrich, 5400, Baden (CH)
(74) Vertreter: Bernotti, Andrea

(56) Entgegenhaltungen:
- EP-A1- 1 286 021
- EP-A1- 1 286 021
- EP-A1- 1 519 010
- EP-A2- 1 387 044
- EP-B1- 1 519 010
- WO-A1-2004/074640
- DE-A1- 3 119 056
- GB-A- 2 356 022
- US-A- 3 752 598
- US-A- 3 752 598
- US-A- 5 374 161
- US-A1- 2004 067 131

## Beschreibung

### Technisches Gebiet

Die vorliegende Erfindung betrifft eine Wandstruktur zur Begrenzung eines Heißgaspfads in einer Gasturbine oder in einer Brennkammer, insbesondere einer Gasturbine, mit den Merkmalen des Oberbegriffs des Anspruchs 1.

### Stand der Technik

Aus der EP 1 033 477 B1 ist eine Wandstruktur dieser Art bekannt, und zwar in Form eines Gasturbinen-Mantelrings, der aus einer Vielzahl von Mantel- bzw. Wandsegmenten aufgebaut ist, die zylinderförmig angeordnet sind. Dabei sind je zwei Wandsegmente in einem Verbindungsbereich zueinander benachbart angeordnet. In diesem Verbindungsbereich ist jeweils eine Stirnseite des einen Wandsegments einer Stirnseite des anderen Wandsegments gegenüberliegend angeordnet. Die Stirnseiten sind voneinander beabstandet und bilden zwischen sich einen Spalt aus, der von einer dem Heißgaspfad zugewandten Innenseite der Wandsegmente zu einer vom Heißgaspfad abgewandten Außenseite der Wandsegmente führt. Die sich am Spalt gegenüberliegenden Stirnseite der Wandsegmente weisen jeweils eine zum Spalt hin offene Aufnahmenut auf. Die Aufnahmenuten sind bezüglich des Spalts einander gegenüberliegend angeordnet und dienen zur Aufnahme eines den Spalt überbrückenden Dichtelements. Zur Kühlung der Wandsegmente im Verbindungsbereich enthält eines der Wandsegmente ein Loch, das von der Außenseite dieses Wandsegments zu dessen Innenseite oder zu dessen Stirnseite führt. Um eine direkte Beaufschlagung des Dichtelements mit den Heißgasen zu vermeiden, ist bei der bekannten Wandstruktur das eine Wandsegment an der Innenseite mit einem von der Stirnseite abstehenden Vorsprung ausgestattet, der in eine Ausnehmung hineinragt, die an der Stirnseite des anderen Wandsegments an dessen Innenseite ausgespart ist. Der Vorsprung besitzt dabei einen im wesentlichen rechteckförmigen Querschnitt, wodurch sich für den Spalt eine Schikane mit zwei rechtwinkligen Umlenkungen ergibt.

Bei der bekannten Wandstruktur weist das Dichtelement einen Rechteckquerschnitt auf. Die Aufnahmenuten sind dazu im wesentlichen komplementär geformt, so dass bei jeder Aufnahmenut zwei einander gegenüberliegende Nutwände parallel zueinander verlaufen. Für eine effiziente Dichtungswirkung ist ein Abstand zwischen den Nutwänden im wesentlichen gleich groß wie eine Dicke des Dichtelements. Das Dichtelement ist somit im wesentlichen passgenau in die Aufnahmenuten eingesetzt.

Die Herstellung der Wandsegmente ist toleranzbehaftet. Des Weiteren ist auch der Zusammenbau der Wandstruktur toleranzbehaftet. Diese Herstellungstoleranzen können im zusammengebauten Zustand zu unterschiedlichen Relativlagen zwischen benachbarten Wandsegmenten führen. Des Weiteren können im Betrieb der Gasturbine bzw. der Brennkammer thermische Ausdehnungseffekte ebenfalls zu sich ändernden Relativlagen bei benachbarten Wandsegmenten führen. Bei der bekannten Wandstruktur führt jedoch eine von der gewünschten Soll-Relativlage zwischen benachbarten Wandsegmenten abweichende Ist-Relativlage zum einen zu einer erschwerten Montage des Dichtelements und zum anderen im Betrieb der Gasturbine bzw. der Brennkammer zu hohen Belastungen und/oder Beschädigungen des Dichtelements bzw. der Wandsegmente im Verbindungsbereich.

Aus der US 3 752 598, der EP 1 286 021 und der DE 31 19 056 sind Wandstrukturen zur Begrenzung eines Heißgaspfades mit benachbarten Wandsegmenten und zwei gegenüberliegend angeordnet Stirnseiten bekannt, wobei die Stirnseiten zwischen sich einen Spalt ausbilden, der von einer einem Heißgaspfad zugewandten Innenseite der Wandsegmente zu einer vom Heißgaspfad abgewandten Außenseite der Wandsegmente führt. Weiter sind Ausführungen offenbart, in denen die Stirnseiten jeweils eine zum Spalt hin offene Aufnahmenut aufweisen und bei denen ein den Spalt überbrückendes Dichtelement in die einander gegenüberliegend angeordneten Aufnahmenuten eingesetzt ist.

### Darstellung der Erfindung

Hier will die Erfindung Abhilfe schaffen. Die Erfindung, wie sie in den Ansprüchen gekennzeichnet ist, beschäftigt sich mit dem Problem, für eine Wandstruktur der eingangs genannten Art eine verbesserte Ausführungsform anzugeben, bei der insbesondere die Gefahr von Beschädigungen aufgrund variierender Relativlagen zwischen benachbarten Wandsegmenten reduziert ist.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, zwischen dem Dichtelement und den Aufnahmenuten in der Dickenrichtung des Dichtelements ein Spiel vorzusehen, das so dimensioniert ist, dass toleranzbedingte und durch thermische Ausdehnungseffekte erzeugte Relativlagenänderungen zwischen den benachbarten Wandsegmenten ohne Verklemmen des Dichtelements in den Aufnahmenuten toleriert werden können. Die Erfindung nutzt hierbei die Erkenntnis, dass ein passgenaues Einsetzen des Dichtelements in die Aufnahmenuten nicht erforderlich ist, um eine hinreichende Dichtwirkung zu erzielen. Es hat sich gezeigt, dass eine ausreichende Dichtwirkung bereits dann festgestellt werden kann, wenn das Dichtelement in jeder Aufnahmenut an jeweils einer der Nutwände flächig oder linienförmig anliegt. Das für diesen Zweck erforderliche Mindestspiel ergibt sich erfindungsgemäß, wenn ein Verhältnis des Abstands zwischen den gegenüberliegenden Nutwänden zur Dicke des Dichtelements größer oder gleich 1,1 ist, wobei hierzu der Abstand der Nutwände am Nutgrund, also unmittelbar vor dem Nutgrund bzw. unmittelbar vor einem ggf. vorhandenen Übergang zwischen den Nutwänden und dem Nutgrund gemessen wird.

Bei einer bevorzugten Ausführungsform können sich die Nutwände parallel zueinander erstrecken. Bei einer solchen Ausgestaltung werden für das Verhältnis von Abstand zu Dicke Werte bevorzugt, die in einem Bereich von 2,5 bis 3,5 liegen. Hierdurch können relativ große Lageänderungen zwischen den über den Verbindungsbereich miteinander gekoppelten Wandsegmenten toleriert werden.

Bei einer anderen Ausführungsform können die Aufnahmenuten jeweils einen sich bis zu einer Nutöffnung aufweitenden konischen Querschnitt aufweisen. Bei einer derartigen Ausgestaltung der Aufnahmenuten verlaufen deren Nutwände bis zum Nutgrund geneigt zueinander. Für das Verhältnis von Abstand zu Dicke werden dann Werte bevorzugt, die zwischen 1,2 und 1,9 liegen. Wichtig ist auch hier, dass der Abstand zwischen den Nutwänden am Nutgrund gemessen wird. Durch den sich trichterförmig aufweitenden Nutquerschnitt kann für einen relativ großen Bereich unterschiedlicher Relativlagen der benachbarten Wandsegmente eine klemmfreie Beweglichkeit des Dichtelements und somit eine hinreichende Dichtungswirkung gewährleistet werden.

Bei einer Wandsegmenten-Paarung, bei welcher das eine Wandsegment einen Vorsprung aufweist, der in eine am anderen Wandsegment ausgebildete Ausnehmung hineinragt, schlägt die Erfindung vor, den Vorsprung mit einem konischen Querschnitt auszustatten, so dass dieser sich zum Spalt hin verjüngt. Auch diese Maßnahme führt zu einer erhöhten Beweglichkeit zwischen den benachbarten Wandsegmenten und reduziert gleichzeitig die Gefahr, dass durch Relativbewegungen zwischen den Wandsegmenten der Spalt dadurch verschlossen wird, dass der Vorsprung an einem Wandabschnitt der Ausnehmung zur Anlage kommt.

Weitere wichtige Merkmale und Vorteile der erfindungsgemäßen Wandstruktur ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Es zeigen, jeweils schematisch,
- Fig. 1: einen stark vereinfachten Querschnitt durch einen Verbindungsbereich zweier benachbarter Wandsegmente einer Wandstruktur nach der Erfindung,
- Fig. 2: eine Ansicht wie in Fig. 1, jedoch bei einer anderen Ausführungsform,
- Fig. 3: eine vergrößerte Detailansicht des Verbindungsbereichs bei einem der Wandsegmente aus Fig. 2,
- Fig. 4: eine Ansicht wie in Fig. 3, jedoch bei einer anderen Ausführungsform,
- Fig. 5: eine Ansicht wie in Fig. 2, jedoch bei einer anderen Ausführungsform,
- Fig. 6: eine Ansicht wie in Fig. 5, jedoch bei einer anderen Relativlage zwischen den Wandsegmenten.

### Wege zur Ausführung der Erfindung

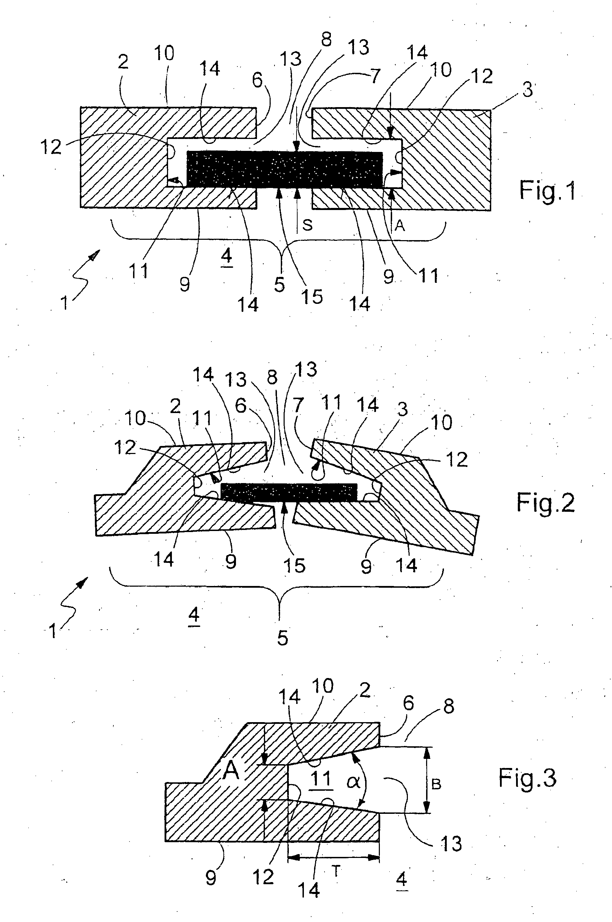

Entsprechend Fig. 1 weist eine hier nur in einem kleinen Ausschnitt dargestellte Wandstruktur 1 zumindest zwei Wandsegmente 2, 3 auf, die hier jeweils nur in einem kleinen stirnseitigen Randbereich dargestellt sind. Üblicherweise umfasst die Wandstruktur 1 eine Vielzahl derartiger Wandsegmente 2, 3 und dient zur Begrenzung eines Heißgaspfads 4 in einer nicht gezeigten Gasturbine oder in einer nicht gezeigten Brennkammer, insbesondere einer Gasturbine. Zweckmäßig kann die Wandstruktur 1 einen Mantelring der Gasturbine oder der Brennkammer bilden, bei dem die einzelnen Wandsegmente 2, 3 zylinderförmig angeordnet sind und Mantelsegmente des Mantelrings bilden.

Fig. 1 zeigt dabei einen Verbindungsbereich 5, in dem zwei Wandsegmente 2, 3 zueinander benachbart angeordnet sind. Dieser Verbindungsbereich 5 ist dabei durch eine geschweifte Klammer gekennzeichnet. In diesem Verbindungsbereich 5 sind eine Stirnseite 6 des einen Wandsegments 2 und eine Stirnseite 7 des anderen Wandsegments 3 einander gegenüberliegend angeordnet. Die beiden Stirnseiten 6, 7 sind dabei voneinander beabstandet und können dadurch zwischen sich einen Spalt 8 ausbilden. Dieser Spalt 8 führt von einer dem Heißgaspfad 4 zugewandten Innenseite 9 der Wandsegmente 2, 3 zu einer vom Heißgaspfad 4 abgewandten Außenseite 10 der Wandsegmente 2, 3. Jede der Stirnseiten 6, 7 enthält jeweils eine zum Spalt 8 hin offene Aufnahmenut 11, die jeweils einen Nutgrund 12, eine dem Nutgrund 12 gegenüberliegende Nutöffnung 13 und zwei einander gegenüberliegende Nutwände 14 aufweisen. Die Aufnahmenuten 11 der beiden Stirnseiten 6, 7 sind einander gegenüberliegend angeordnet. Um den Spalt 8 abzudichten, ist in die Aufnahmenuten 11 ein Dichtelement 15 eingesetzt, das den Spalt 8 überbrückt und hierzu in beide Aufnahmenuten 11 eingreift. Das Dichtelement 15 ist üblicherweise ein bandförmiger Körper aus Metall und besitzt vorzugsweise einen rechteckförmigen Querschnitt. Dabei können die Ecken dieses Rechteckquerschnitts mehr oder weniger stark abgerundet sein. Grundsätzlich sind jedoch auch andere Querschnittsgeometrien für das Dichtelement 15 denkbar. Beispielsweise kann das Dichtelement 15 einen rhombusförmigen Querschnitt aufweisen.

Das Dichtelement 15 kann beispielsweise eine Dicke S aufweisen, die in einem Bereich von 0,2 mm bis 1,5 mm liegt.

Erfindungsgemäß greift das Dichtelement 15 mit seitlichem Spiel in die Aufnahmenuten 11 ein. Zu diesem Zweck ist ein Abstand A zwischen den Nutwänden 14 der jeweiligen Nut 11 größer als die Dicke S des Dichtelements 15. Zur Realisierung eines erwünschten Mindestspiels ist ein Verhältnis des Abstands A zur Dicke S größer oder gleich 1,1. Der Abstand A zwischen den Nutwänden 14 ist dabei am Nutgrund 12 zu messen, also unmittelbar vor dem Nutgrund 12 bzw. unmittelbar vor einem ggf. vorhandenen abgerundeten Übergang der Nutwände 14 zum Nutgrund 12. Bei einer Nutgeometrie, wie sie bei der in Fig. 1 gezeigten Ausführungsform gewählt ist, kann der Abstand A an einer beliebigen Stelle zwischen Nutgrund 12 und Nutöffnung 13 gemessen werden, da dort die Nutwände 14 parallel zueinander angeordnet sind. Die Dicke S des Dichtelements 15 kann bei der hier gezeigten Ausführungsform an einer beliebigen Stelle gemessen werden, da der Rechteckquerschnitt des Dichtelements 15 eine konstante Dicke S besitzt. Sofern ein Dichtelement 15 verwendet wird, das eine über die Breite des Dichtelements 15 variierende Dicke S aufweist, so ist die Dicke S an dem dem jeweiligen Nutgrund 12 zugewandten seitlichen Ende des Dichtelements 15 zu messen.

Durch das erfindungsgemäß vorgesehene Spiel, bei dem gilt: A/S ≥ 1,1, kann erreicht werden, dass die benachbarten Wandsegmente 2, 3 zueinander unterschiedliche Relativlagen aufweisen können, bei denen jeweils eine hinreichende Dichtungswirkung gewährleistet werden kann. Eine Variation der Relativlagen benachbarter Wandsegmente 2, 3 kann durch thermische Ausdehnungseffekte entstehen. Ebenso können Herstellungstoleranzen für unterschiedliche Relativlagen benachbarter Wandsegmente 2, 3 verantwortlich sein.

Die Dichtungswirkung der so bereitgestellten Spaltabdichtung wird durch eine Kraft erreicht, mit welcher das Dichtelement 15 an die näher am Heißgaspfad 4 angeordneten Nutwände 14 angedrückt wird. Diese Kraftwirkung kann beispielsweise durch den Druck eines Kühlmediums, durch Fliehkräfte, durch Federkräfte oder dgl. erzeugt werden.

Für die in Fig. 1 gezeigte Ausführungsform, bei der sich die einander gegenüberliegenden Nutwände 14 innerhalb der jeweiligen Aufnahmenut 11 parallel zueinander erstrecken, werden für das Verhältnis von Abstand A zu Dicke S Werte bevorzugt, die in einem Bereich von 2,5 bis 3,5 liegen. Durch diese Abstimmung der Dimensionierungen von Aufnahmenuten 11 und Dichtelement 15 können übliche Fertigungstoleranzen und übliche Wärmedehnungen von der im Verbindungsbereich 15 realisierten Spaltabdichtung ohne Beschädigung toleriert werden.

Bei der in Fig. 2 gezeigten Ausführungsform verlaufen die Nutwände 14 zueinander geneigt, und zwar von der Nutöffnung 13 bis zum Nutgrund 12. Hierdurch ergibt sich für die jeweilige Aufnahmenut 11 ein konischer Nutquerschnitt, der sich bis zur Nutöffnung 13 aufweitet. Mit Hilfe eines derartigen konischen Nutquerschnitts können sehr starke Relativlagenänderungen zwischen benachbarten Wandsegmenten 2, 3 vom Dichtelement 15 toleriert werden. Fig. 2 deutet in übertriebener Darstellung eine extreme Relativlage an, bei der noch immer eine hinreichende Abdichtungswirkung erzielt werden kann.

Für eine Ausführungsform der Fig. 2 und 3, bei der die Aufnahmenuten 11 jeweils einen konischen Nutquerschnitt besitzen, werden für das Verhältnis von Abstand A zu Dicke S Werte bevorzugt, die in einem Bereich von 1,2 bis 1,9 liegen. Beim konischen Nutquerschnitt ist entscheidend, dass der Abstand A unmittelbar am Nutgrund 12 gemessen wird, wie dies in Fig. 3 angedeutet ist. Des Weiteren erfolgt die Dimensionierung der Nutgeometrie zweckmäßig so, dass ein Verhältnis von einer an der Nutöffnung 13 gemessenen Öffnungsweite B zum Abstand A Werte besitzt, die in einem Bereich von 1,2 bis 4 liegen. Zusätzlich oder alternativ kann außerdem ein Verhältnis von einer Nuttiefe T zur Dicke S des Dichtelements 15 so gewählt werden, dass es Werte aufweist, die in einem Bereich von 10 bis 35 liegen. Durch die Dimensionen von Abstand A, Öffnungsweite B und Nuttiefe T kann ein Konuswinkel α, mit dem die Nutwände 14 gegeneinander geneigt sind, ermittelt werden.

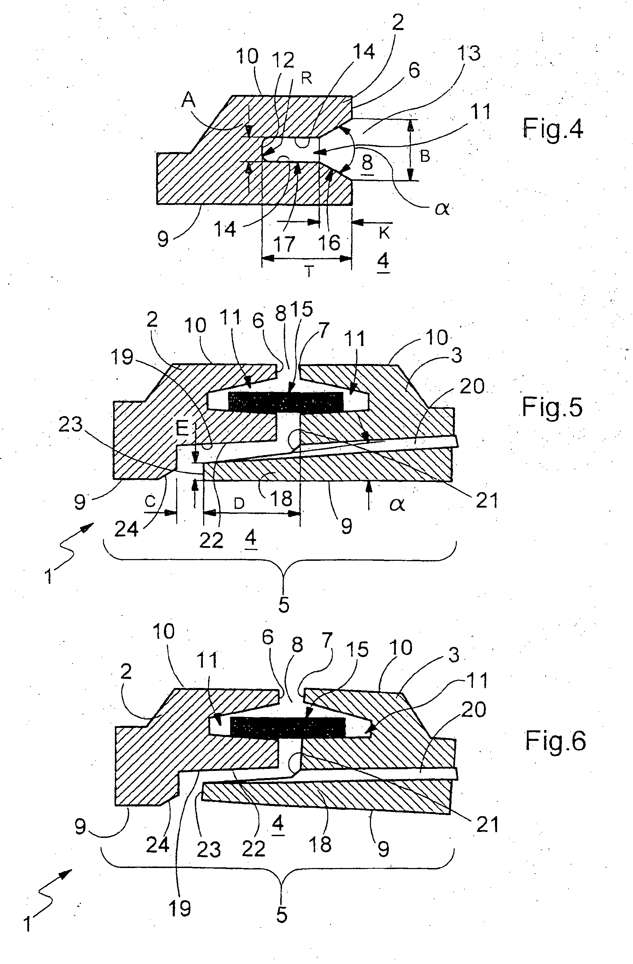

Fig. 4 zeigt eine spezielle Ausführungsform einer erfindungsgemäßen Nutgeometrie. Die Aufnahmenut 11 weist hier einen konischen Querschnittsabschnitt 16 und einen daran anschließenden konstanten Querschnittsabschnitt 17 auf. Die beiden Querschnittsabschnitte 16, 17 gehen direkt ineinander über. Während sich der konische Querschnittsabschnitt 16 bis zu Nutöffnung 13 erstreckt und sich dabei aufweitet, erstreckt sich der konstante Querschnittsabschnitt 17 bis zum Nutgrund 12 und charakterisiert sich dadurch, dass sich in ihm die Nutwände 14 parallel zueinander erstrecken. Auch hier wird eine Variante bevorzugt, bei der das Verhältnis von Abstand A der Nutwände 14 zur Dicke S des Dichtelements 15 Werte aufweist, die in einem Bereich von 1,2 bis 1,9 liegen. Des Weiteren kann es auch hier zweckmäßig sein, ein Verhältnis von Öffnungsweite B zu Abstand A so zu wählen, dass daraus Werte resultieren, die in einem Bereich von 1,2 bis 4 liegen. Außerdem kann auch hier ein Verhältnis von der gesamten Nuttiefe T zu Dicke S in einem Bereich von 10 bis 35 liegen. Für die Dimensionierung des konischen Querschnittabschnitts 16 wird eine Ausführungsform bevorzugt, bei der ein Verhältnis von einer Tiefe K des konischen Querschnittabschnitts 16 zur gesamten Nuttiefe T Werte aufweist, die in einem Bereich von 0,1 bis 0,8 liegen. Auch hier lässt sich ein Konuswinkel α aus den genannten Verhältnissen bzw. aus den genannten Dimensionen Abstand A, Nuttiefe T, Öffnungsweite B und Tiefe K des konischen Querschnittabschnitts 16 ermitteln.

Bei der Ausführungsform gemäß Fig. 4 ist außerdem der Nutgrund 12 abgerundet bzw. ausgerundet. Diese Ausrundung kann beispielsweise mit einem Radius R realisiert sein, wobei sich für ein Verhältnis von Radius R zu Abstand A Werte als sinnvoll erwiesen haben, die in einem Bereich von 0,1 bis 0,5 liegen. Obwohl bei den anderen hier gezeigten Ausführungsformen der Nutgrund 12 nicht abgerundet dargestellt ist, ist klar, dass ein abgerundeter Nutgrund 12 für alle Ausführungsformen zweckmäßig sein kann, wobei vorzugsweise auch bei den anderen Ausführungsformen die oben genannte Berechnungsvorschrift für den Radius R herangezogen werden kann.

Bei der Ausführungsform der Fig. 5 und 6 ist das eine hier rechts dargestellte Wandsegment 3 an seiner Innenseite 9 mit einem Vorsprung 18 ausgestattet, der von der Stirnseite 7 dieses Wandsegments 3 absteht. Quasi komplementär dazu ist das links dargestellte andere Wandsegment 2 an seiner Innenseite 9 mit einer Ausnehmung 19 ausgestattet, die an der Innenseite 6 dieses Wandsegments 2 ausgespart ist. Vorsprung 18 und Ausnehmung 19 sind dabei so aufeinander abgestimmt, dass der Vorsprung 18 in die Ausnehmung 19 hineinragt und zwar so, dass sich für den Spalt 8 eine spezielle Geometrie ergibt. Durch das Zusammenwirken von Vorsprung 18 und Ausnehmung 19 ist das Dichtelement 19 vor einer direkten Beaufschlagung mit Heißgasen aus dem Heißgaspfad 4 geschützt. Grundsätzlich kann jede der zuvor beschriebenen Ausführungsformen mit einer derartigen Vorsprung-Ausnehmungs-Kombination 18-19 ausgestattet sein.

Die Ausführungsform der Fig. 5 und 6 ist außerdem mit wenigstens einem Kühlkanal 20 ausgestattet, der ein Kühlmedium von einem nicht dargestellten Einlass zu einem Auslass 21 transportiert, der hier in den Spalt 8 einmündet. Der Kühlkanal 20 ist hierbei durch das eine Wandsegment 3 bis zu dessen Stirnseite 7 geführt. Grundsätzlich ist es ebenso möglich, den Kühlkanal 20 nicht im Spalt 8, sondern an der Innenseite 9 des jeweiligen Wandsegments 3 enden zu lassen. Des Weiteren kann zusätzlich oder alternativ auch das andere Wandsegment 2 mit wenigstens einem derartigen Kühlkanal 20 ausgestattet sein.

Es ist klar, dass ein derartiger Kühlkanal 20 auch bei einer der anderen, zuvor beschriebenen Ausführungsformen in entsprechender Weise realisiert werden kann.

Von besonderer Bedeutung ist nun, dass dieser Vorsprung 18 mit einem konischen Querschnitt ausgestattet ist, so dass sich der Vorsprung 18 bis zum Spalt 8 hin verjüngt. Mit Hilfe der Konizität des Vorsprungs 18 können die benachbarten Wandsegmente 2, 3 Relativbewegungen zueinander durchführen, ohne dass es dabei zu einem Kontakt zwischen dem Vorsprung 18 und einer dem Vorsprung 18 zugewandten Wand 22 der Ausnehmung 19 kommt. Mit anderen Worten, der Spalt 8 bleibt stets hinreichend weit geöffnet, um einen schädlichen Kontakt der im Verbindungsbereich 5 miteinander gekoppelten Wandsegmente 2, 3 zu vermeiden, und eine Sperrung des Kühlkanals 20 zu verhindern.

Für ein Verhältnis von einer Länge D des Vorsprungs 18 zu einer Enddicke E des Vorsprungs 18 an dessen freien Ende 23 haben sich Werte als vorteilhaft herausgestellt, die in einem Bereich von 1,5 bis 6 liegen. Die Länge D des Vorsprungs 18 ist dabei die Dimension, mit welcher der Vorsprung 18 von der übrigen Stirnseite 7 des jeweiligen Wandsegments 3 absteht. Das freie Ende 23 des Vorsprungs 18 liegt am Spalt 8.

Zusätzlich oder alternativ kann ein Verhältnis von einer Spaltweite C zwischen dem Vorsprung 18 und der Ausnehmung 19 zur genannten Enddicke E des Vorsprungs 18 so gewählt werden, dass es Werte aufweist, die in einem Bereich von 1,0 bis 5 liegen. In Fig. 5 und 6 ist erkennbar, dass die Spaltweite C ohne Berücksichtigung einer ggf. vorhandenen Abflachung 24 gemessen wird, die ggf. am Übergang zwischen Spalt 8 und Innenseite 9 des jeweiligen Wandsegments 2 vorgesehen sein kann.

Für den Konuswinkel α des Vorsprungs 18 können Werte zweckmäßig sein, die in einem Bereich von 2° bis 60° liegen. Bevorzugt werden dabei Werte von 5° bis 15°.

Bei der in den Fig. 5 und 6 gezeigten Ausführungsform sind die Aufnahmenuten 11 wie bei der Ausführungsform der Fig. 2 und 3 geformt. In entsprechender Weise erfolgt auch die Abstimmung der Dimensionierung des Dichtelements 15. Es ist klar, dass anstelle dieser Dichtungsvariante auch die in den Fig. 1 oder 4 gezeigten Varianten zur Anwendung kommen können.

### Bezugszeichenliste

- 1: Wandstruktur
- 2: Wandsegment
- 3: Wandsegment
- 4: Heißgaspfad
- 5: Verbindungsbereich
- 6: Stirnseite von 2
- 7: Stirnseite von 3
- 8: Spalt
- 9: Innenseite von 2, 3
- 10: Außenseite von 2, 3
- 11: Aufnahmenut
- 12: Nutgrund
- 13: Nutöffnung
- 14: Nutwand
- 15: Dichtelement
- 16: konischer Querschnittsabschnitt von 11
- 17: konstanter Querschnittsabschnitt von 11
- 18: Vorsprung
- 19: Ausnehmung
- 20: Kühlkanal
- 21: Auslass von 20
- 22: Wand von 19
- 23: Ende von 18
- 24: Abflachung
- A: Abstand zwischen 14
- S: Dicke von 15
- T: Nuttiefe von 11
- B: Öffnungsweite von 11
- α: Konuswinkel
- K: Tiefe von 16
- D: Länge von 18
- E: Enddicke von 18
- C: Spaltweite von 8
- R: Radius der Rundung von 12

## Patentansprüche

1. Wandstruktur zur Begrenzung eines Heißgaspfads (4) in einer Gasturbine oder in einer Brennkammer, insbesondere einer Gasturbine,
- mit wenigstens zwei Wandsegmenten (2, 3), die in einem Verbindungsbereich (5) zueinander benachbart angeordnet sind,
- wobei im Verbindungsbereich (5) eine Stirnseite (6) des einen Wandsegments (2) einer Stirnseite (7) des anderen Wandsegments (3) gegenüberliegend angeordnet ist,
- wobei die Stirnseiten (6, 7) voneinander beabstandet sind und zwischen sich einen Spalt (8) ausbilden, der von einer dem Heißgaspfad (4) zugewandten Innenseite (9) der Wandsegmente (2, 3) zu einer vom Heißgaspfad (4) abgewandten Außenseite (10) der Wandsegmente (2, 3) führt,
- wobei die Stirnseiten (6, 7) jeweils eine zum Spalt (8) hin offene Aufnahmenut (11) aufweisen,
- wobei ein den Spalt (8) überbrückendes Dichtelement (15) in die einander gegenüberliegend angeordneten Aufnahmenuten (11) eingesetzt ist,
- wobei ein Verhältnis von einem an einem Nutgrund (12) der jeweiligen Aufnahmenut (11) gemessenen Abstand (A) zwischen zwei einander gegenüberliegenden Nutwänden (14) der jeweiligen Aufnahmenut (11) zu einer Dicke (S) des Dichtelements (15) größer oder gleich 1,1 ist,
**dadurch gekennzeichnet, dass**
das eine Wandsegment (3) an der Innenseite (9) einen von der Stirnseite (7) abstehenden Vorsprung (18) aufweist, der in eine Ausnehmung (19) hineinragt,
die an der Stirnseite (6) des anderen Wandsegments (2) an dessen Innenseite (9) ausgespart ist, wobei der Vorsprung (18) einen konischen Querschnitt aufweist, der sich zum Spalt (8) hin verjüngte, und
dass ein Verhältnis von einer Spaltweite (C) zwischen Vorsprung (18) und Ausnehmung (19) zu einer Enddicke (E) des Vorsprungs (18) an dessen am Spalt (8) liegenden Ende (23) in einem Bereich von 1,0 bis 5 liegt.

2. Wandstruktur nach Anspruch 1, **dadurch gekennzeichnet,**
- **dass** sich die Nutwände (14) parallel zueinander erstrecken,
- **dass** das Verhältnis von Abstand (A) zu Dicke (S) in einem Bereich von 2,5 bis 3,5 liegt.

3. Wandstruktur nach Anspruch 1, **dadurch gekennzeichnet,**
- **dass** jede Aufnahmenut (11) einen sich bis zu einer Nutöffnung (13) aufweitenden konischen Nutquerschnitt mit bis zum Nutgrund (12) geneigt zueinander verlaufenden Nutwänden (14) aufweist,
- **dass** das Verhältnis von Abstand (A) zu Dicke (S) in einem Bereich von 1,2 bis 1,9 liegt.

4. Wandstruktur nach Anspruch 3, **dadurch gekennzeichnet, dass** ein Verhältnis von einer an der Nutöffnung (13) gemessenen Öffnungsweite (B) zum am Nutgrund (12) gemessenen Abstand (A) in einem Bereich von 1,2 bis 4 liegt.

5. Wandstruktur nach Anspruch 3 oder 4, **dadurch gekennzeichnet, dass** ein Verhältnis von einer Nuttiefe (T) zur Dicke (S) des Dichtelements (15) in einem Bereich von 10 bis 35 liegt.

6. Wandstruktur nach Anspruch 1, **dadurch gekennzeichnet, dass** jede Aufnahmenut (11) einen sich bis zu einer Nutöffnung (13) aufweitenden konischen Querschnittsabschnitt (16) mit zueinander geneigten Nutwänden (14) und einen daran anschließenden, sich bis zum Nutgrund (12) erstreckenden konstanten Querschnittsabschnitt (16) mit zueinander parallelen Nutwänden (14) aufweist.

7. Wandstruktur nach Anspruch 6, **dadurch gekennzeichnet, dass** das Verhältnis von Abstand (A) zu Dicke (S) in einem Bereich von 1,2 bis 1,9 liegt.

8. Wandstruktur nach Anspruch 6 oder 7, **dadurch gekennzeichnet, dass** ein Verhältnis von einer an der Nutöffnung (13) gemessenen Öffnungsweite (B) zum am Nutgrund (12) gemessenen Abstand (A) in einem Bereich von 1,2 bis 4 liegt.

9. Wandstruktur nach einem der Ansprüche 6 bis 8, **dadurch gekennzeichnet,**
**dass** ein Verhältnis von einer Nuttiefe (T) zur Dicke (S) des Dichtelements (15) in einem Bereich von 10 bis 35 liegt.

10. Wandstruktur nach einem der Ansprüche 6 bis 9, **dadurch gekennzeichnet, dass** ein Verhältnis von einer Tiefe (K) des konischen Querschnittsabschnitts (16) zu einer Nuttiefe (T) in einem Bereich von 0,1 bis 0,8 liegt.

11. Wandstruktur nach einem der Ansprüche 1 bis 10, **dadurch gekennzeichnet, dass** der Nutgrund (12) ausgerundet ist.

12. Wandstruktur nach Anspruch 11, **dadurch gekennzeichnet,**
- **dass** der Nutgrund (12) mit einem Radius (R) ausgerundet ist,
- **dass** ein Verhältnis von Radius (R) zu Abstand (A) in einen Bereich von 0,1 bis 0, 5 liegt.

13. Wandstruktur nach einem der Ansprüche 1 bis 12, **dadurch gekennzeichnet, dass** das Dichtelement (15) einen Rechteckquerschnitt mit oder ohne abgerundete Ecken aufweist.

14. Wandstruktur nach einem der Ansprüche 1 bis 13, die wenigstens einen Kühlkanal (20) umfasst, der bei einem Auslass (21) in den Spalt (8) einmündet.

15. Wandstruktur nach einem der Ansprüche 1 bis 14, **dadurch gekennzeichnet, dass** ein Verhältnis von einer Länge (D) des Vorsprungs (18), mit welcher dieser von der übrigen Stirnseite (7) absteht, zu einer Enddicke (E) des Vorsprungs (18) an dessen am Spalt (8) liegenden Ende (23) in einem Bereich von 1,5 bis 6 liegt.

16. Wandstruktur nach einem der Ansprüche 1 bis 15. **dadurch gekennzeichnet, dass** ein Konuswinkel (α) des Vorsprungs (18) in einem Bereich von 2° bis 60° liegt.

## Claims

1. Wall structure to delimit a hot gas path (4) in a gas turbine or in a combustion chamber, in particular of a gas turbine,
- with at least two wall segments (2, 3) arranged adjacent to each other in a connecting region (5),
- wherein in the connecting region (5), an end face (6) of the one wall segment (2) is arranged opposite an end face (7) of the other wall segment (3),
- wherein the end faces (6, 7) are spaced apart from each other and between them form a gap (8) which leads from an inside (9) of the wall segments (2, 3) facing the hot gas path (4) to an outside (10) of the wall segments (2, 3) facing away from the hot gas path (4),
- wherein the end faces (6, 7) each have a receiving groove (11) open towards the gap (8),
- wherein a sealing element (15) bridging the gap (8) is inserted in the mutually opposite receiving grooves (11),
- wherein a ratio of a distance (A), measured between two opposing groove walls (14) of the respective receiving groove (11) at a groove base (12) of the respective receiving groove (11), to a thickness (S) of the sealing element (15) is greater than or equal to 1.1,
**characterised in that**
on the inside (9), a wall segment (3) has a protrusion (18) protruding from the end face (7) and extending into the recess (19) which is recessed in the end face (6) of the other wall segment (2) on the inside (9), wherein the protrusion (18) has a conical cross-section which tapers towards the gap (8), and
that a ratio of a gap width (C) between the protrusion (18) and the recess (19), to an end thickness (E) of the protrusion (18) at its end (23) lying at the gap (8), lies in a range from 1.0 to 5.

2. Wall structure according to claim 1, **characterised in that**
- the groove walls (14) extend parallel to each other,
- the ratio of distance (A) to thickness (S) lies in a range from 2.5 to 3.5.

3. Wall structure according to claim 1, **characterised in that**
- each receiving groove (11) has a conical groove cross-section widening towards a groove opening (13), with groove walls (14) running sloping towards each other towards the groove base (12),
- the ratio of distance (A) to thickness (S) lies the range from 1.2 to 1.9.

4. Wall structure according to claim 3, **characterised in that** a ratio of an opening width (B) measured at the groove opening (13), to the distance (A) measured at the groove base (12), lies in the range from 1.2 to 4.

5. Wall structure according to claim 3 or 4, **characterised in that** a ratio of a groove depth (T) to the thickness (S) of the sealing element (15) lies in the range from 10 to 35.

6. Wall structure according to claim 1, **characterised in that** each receiving groove (11) has a conical cross-section portion (16) widening towards a groove opening (13) with groove walls (14) sloping towards each other, and adjacent thereto a constant cross-section portion (16) extending to the groove base (12) with groove walls (14) parallel to each other.

7. Wall structure according to claim 6, **characterised in that** the ratio of distance (A) to thickness (S) lies in a range from 1.2 to 1.9.

8. Wall structure according to claim 6 or 7, **characterised in that** a ratio of an opening width (B) measured at a groove opening (13), to the distance (A) measured at the groove base (12), lies in a range from 1.2 to 4.

9. Wall structure according to any of claims 6 to 8, **characterised in that** a ratio of a groove depth (T) to the thickness (S) of the sealing element (15) lies in a range from 10 to 35.

10. Wall structure according to any of claims 6 to 9, **characterised in that** a ratio of a depth (K) of the conical cross-section portion (16) to a groove depth (T) lies in a range from 0.1 to 0.8.

11. Wall structure according to any of claims 1 to 10, **characterised in that** the groove base (12) is rounded.

12. Wall structure according to claim 11, **characterised in that**
- the groove base (12) is rounded with a radius (R),
- a ratio of radius (R) to distance (A) lies in a range from 0.1 to 0.5.

13. Wall structure according to any of claims 1 to 12, **characterised in that** the sealing element (15) has a rectangular cross-section with or without rounded corners.

14. Wall structure according to any of claims 1 to 13, which comprises at least one cooling channel (29) which opens into the gap (8) at an outlet (21).

15. Wall structure according to any of claims 1 to 14, **characterised in that** a ratio of a length (D) of the protrusion (18) with which it protrudes from the remaining end face (7), to an end thickness (E) of the protrusion (18) at its end (23) lying at the gap (8), lies in the range from 1.5 to 6.

16. Wall structure according to any of claims 1 to 15, **characterised in that** a cone angle (α) of the protrusion (18) lies in the range from 2° to 60°.

## Revendications

1. Structure de paroi pour la limitation d'un trajet de gaz chaud (4) dans une turbine à gaz ou dans une chambre de combustion, plus particulièrement d'une turbine à gaz,
- avec au moins deux segments de paroi (2, 3) qui sont disposés de manière adjacente entre eux dans une zone de liaison (5),
- un côté frontal (6) d'un segment de paroi (2) étant disposé, dans la zone de liaison (5), en face d'un côté frontal (7) de l'autre segment de paroi (3),
- les côtés frontaux (6, 7) étant distants entre eux et formant entre eux un interstice (8) qui conduit d'un côté interne (9), orienté vers le trajet de gaz chaud (4), des segments de paroi (2, 3), vers un côté externe (10), opposé au trajet de gaz chaud (4), des segments de paroi (2, 3),
- les côtés frontaux (6, 7) comprenant chacun une rainure de logement (11) ouverte vers l'interstice (8),
- un élément d'étanchéité (15) recouvrant l'interstice (8) étant inséré dans les rainures de logement (11) disposées en face les unes des autres,
- un rapport entre une distance (A), mesurée au niveau d'un fond de rainure (12) de la rainure de logement (11) correspondante, entre deux parois de rainures (14) opposées à la rainure de logement (11) correspondante et une épaisseur (S) de l'élément d'étanchéité (15) étant supérieur ou égal à 1,1,
**caractérisée en ce que**
un segment de paroi (3) comprend, au niveau du côté interne (9), une saillie (18) dépassant du côté frontal (7), qui dépasse dans un évidement (19) réalisé au niveau du côté frontal (6) de l'autre segment de paroi (2) sur son côté interne (9), la saillie (18) présentant une section transversale conique, qui rétrécit en direction de l'interstice (8) et
un rapport entre une largeur d'interstice (C) entre la saillie (18) et l'évidement (19) et une épaisseur finale (E) de la saillie (18) à son extrémité (23) se trouvant au niveau de l'interstice (8), étant de l'ordre de 1,0 à 5.

2. Structure de paroi selon la revendication 1, **caractérisée en ce que**
- les parois de la rainure (14) sont parallèles entre elles,
- le rapport entre la distance (A) et l'épaisseur (S) est de l'ordre de 2,5 à 3,5.

3. Structure de paroi selon la revendication 1, **caractérisée en ce que**
- chaque rainure de logement (11) présente une section transversale conique s'élargissant jusqu'à une ouverture de rainure (13) avec des parois de rainure (14) s'étendant de manière inclinée jusqu'au fond de la rainure (12),
- le rapport entre la distance (A) et l'épaisseur (S) est de l'ordre de 1,2 à 1,9.

4. Structure de paroi selon la revendication 3, **caractérisée en ce qu'**un rapport entre une largeur d'ouverture (B) mesurée au niveau de l'ouverture de rainure (13) et une distance (A) mesurée au niveau du fond de la rainure (12) est de l'ordre de 1,2 à 4.

5. Structure de paroi selon la revendication 3 ou 4, **caractérisée en ce qu'**un rapport entre une profondeur de rainure (T) et une épaisseur (S) de l'élément d'étanchéité (15) est de l'ordre de 10 à 35.

6. Structure de paroi selon la revendication 1, **caractérisée en ce que** chaque rainure de logement (11) comprend une portion de section transversale conique (16) s'élargissant jusqu'à une ouverture de rainure (13), avec des parois de rainure (14) inclinées entre elles et une portion de section transversale (16) constante s'étendant jusqu'au fond de la rainure (12), avec des parois de rainure (14) parallèles entre elles.

7. Structure de paroi selon la revendication 6, **caractérisée en ce que** le rapport entre la distance (A) et l'épaisseur (S) est de l'ordre de 1,2 à 9.

8. Structure de paroi selon la revendication 6 ou 7, **caractérisée en ce qu'**un rapport entre une largeur d'ouverture (B) mesurée au niveau de l'ouverture de rainure (13) et la distance (A) mesurée au niveau du fond de la rainure (12) est de l'ordre de 1,2 à 4.

9. Structure de paroi selon l'une des revendications 6 à 8, **caractérisée en ce qu'**un rapport entre une profondeur de rainure (T) et l'épaisseur (S) de l'élément d'étanchéité (15) est de l'ordre de 10 à 35.

10. Structure de paroi selon l'une des revendications 6 à 9, **caractérisée en ce qu'**un rapport entre une profondeur (K) de la portion de section transversale conique (16) et une profondeur de rainure (T) est de l'ordre de 0,1 à 0,8.

11. Structure de paroi selon l'une des revendications 1 à 10, **caractérisée en ce que** le fond de la rainure (12) est arrondi.

12. Structure de paroi selon la revendication 11, **caractérisée en ce que**
- le fond de la rainure (12) est arrondi avec un rayon (R),
- un rapport entre le rayon (R) et la distance (A) est de l'ordre de 0,1 à 0,5.

13. Structure de paroi selon l'une des revendications 1 à 12, **caractérisée en ce que** l'élément d'étanchéité (15) présente une section transversale rectangulaire avec ou sans angles arrondis.

14. Structure de paroi selon l'une des revendications 1 à 13, qui comprend au moins un canal de refroidissement (20), qui débouche au niveau d'une sortie (21) dans l'interstice (8).

15. Structure de paroi selon l'une des revendications 1 à 14, **caractérisée en ce qu'**un rapport entre une longueur (D) de la saillie (18), avec laquelle celle-ci dépasse du côté frontal (7), et une épaisseur finale (E) de la saillie (18) à son extrémité (23) se trouvant au niveau de l'interstice (8) est de l'ordre de 1,5 à 6.

16. Structure de paroi selon l'une des revendications 1 à 15, **caractérisée en ce qu'**un angle de cône (α) de la saillie (18) est de l'ordre de 2° à 60°.
